# EUROPEAN PATENT SPECIFICATION

(11) **EP 0 399 713 B1**
(45) Date of publication and mention of the grant of the patent: **28.12.1994**
(21) Application number: 90305159.7
(22) Date of filing: 14.05.1990
(51) Int. Cl.: H04N 3/18

(54) **Cathode ray tube display with increased cathode efficiency**
Kathodenstrahlröhrenanzeige mit erhöhter Kathodenleistungsfähigkeit
Affichage à tube à rayons cathodiques avec efficacité de la cathode améliorée

(30) Priority: 20.05.1989 GB 8911656
(43) Date of publication of application: 28.11.1990
(73) Proprietor: International Business Machines Corporation, Armonk, N.Y. 10504 (US)
(72) Inventor: Morrish, Andrew John, Eastleigh, Hampshire SO4 4RE (GB); Williams, Julian David, Marchwood Hampshire SO4 4XL (GB); Eagle, David John, Chandlers Ford, Hampshire (GB); Clitheroe, Adrian Mark, Titchfield Common, Fareham, P014 4PA (GB)
(74) Representative: Burt, Roger James, Dr.

(56) References cited:
- IBM TECHNICAL DISCLOSURE BULLETIN. vol. 29, no. 9, February 1987, NEW YORK US pages 3896 - 3898; "Automatic CRT Heater Control"

## Description

The present invention relates to increasing the efficiency of a cathode in a cathode ray tube (CRT) and in particular to a cathode heater circuit for a CRT display.

CRT displays can present visual outputs from computers, television receivers and electrical measuring apparatus. The IBM 8515 colour monitor is an example of a CRT display for presenting a visual output from a computer.

The cathode ray tube (CRT) utilises a cathode to produce hot electrons by thermionic emission. The electrons are accelerated and deflected to yield an image on a screen. The brightness or luminous intensity of this image can be related to the number of electrons attracted to the screen at any one time, (this electron stream is termed the beam current) with increased brightness resulting from higher beam currents.

The cathode is frequently composed of carbonates of barium and strontium that are converted to oxides in a vacuum. When the cathode is activated, an excess of barium oxide (or strontium oxide) is produced and, in this state, the cathode becomes highly conductive at the operating temperature (typically around 1000° K), yielding a copious supply of electrons. The amount of excess barium oxide, and hence the supply of electrons, increases with temperature. The cathode, however, has only a finite supply of barium and, once depleted, the supply of electrons ceases.

There is a relationship between the cathode temperature, the CRT lifetime, and the voltage applied to an electrical heater for heating the cathode. In the prior art there are two common ways of supplying the heater voltage; firstly using a horizontal flyback voltage with suitable limiting resistors to supply a Root Mean Square (RMS) voltage, or secondly a DC regulated supply. In both cases the average heater power is heavily regulated to a fixed value (based on a predicted average beam current) as recommended by the CRT manufacturer to ensure long life. Problems can arise when high beam currents are required, in that insufficient free electrons are present at the surface of the cathode, and cathode stripping occurs (that is the CRT display is unable to meet the brightness requirement). Increasing the cathode temperature (as a function of the cathode heater voltage) would prevent this but would necessarily lead to shortened CRT lifetime.

With the continual drive towards improved performance, one of the requirements of today's monitors is to provide increased display brightness, while maintaining a long CRT working life.

IBM Technical Disclosure Bulletin Vol.29 No.9 February 1987 describes an automatic CRT heater controller for extending the lifetime of a CRT in a CRT display. This resets the heater voltage when the CRT display is turned on to the value needed in order to give a predetermined beam current.

An object of the present invention is to satisfy the conflicting interests of prolonged CRT lifetime, while meeting the need for an increased brightness capability.

In accordance with the present invention there is now provided, a cathode heater circuit for a CRT display, the circuit comprising control means for varying a voltage across the cathode heater in response to variation in the beam current density within the CRT; characterised in that the circuit comprises: a voltage generator for generating a CRT final anode voltage; a power supply for supplying power to the voltage generator to produce the final anode voltage and for supplying power to the cathode heater; and an electronic network for transferring power from the power supply to the voltage generator, the network being configured to dynamically vary the heater voltage in response to variation in power drawn from the power supply by the voltage generator.

This has an advantage that the control means dynamically varies the heater voltage during display operation to maximise the CRT lifetime in response to displayed image content. The present invention is therefore particularly suitable for displaying computer-generated information in the form of high brightness blocks or "windows".

Viewing the present invention from another aspect there is now provided a method for increasing the cathode efficiency within a CRT display, the method comprising: varying a voltage across the cathode heater in response to variation in the beam current density within the CRT; generating, using a voltage generator, a CRT final anode voltage; supplying power from a power supply to the voltage generator and to the cathode heater; transferring power from the power supply to the voltage generator using an electronic network, dynamically varying, using the electronic network, the heater voltage in response to variation in power drawn from the power supply by the voltage generator.

A specific embodiment of the invention will now be described with the aid of the accompanying drawings in which:-
Figure 1 is a block diagram of a heater circuit of the present invention;
Figure 2 is an example of a heater circuit of the present invention;
Figure 3a, 3b and 3c show different relationships between heater voltage and beam current.

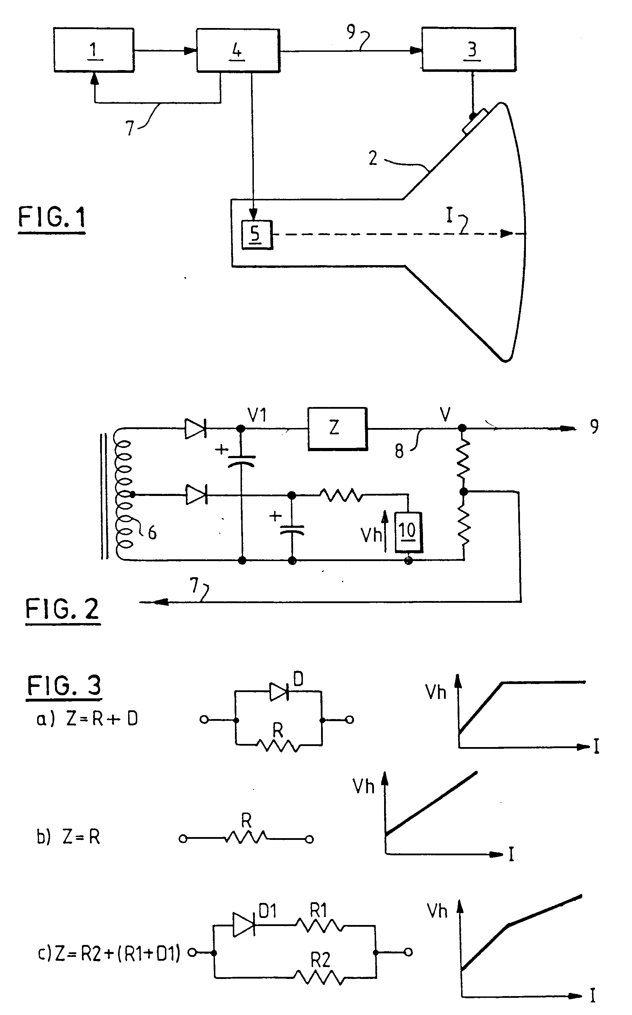

A heater circuit of the present invention will now be described with reference to figure 1. Block 1 supplies power to a CRT 2. Block 3 represents an anode voltage generator; changing the anode voltage used to attract electrons to the screen can be utilised to vary the beam current (I) within the CRT 2. The beam current is "sensed" and the cathode heater voltage regulated as a function of the beam current, by block 4. In this way, the supply of electrons generated at any one time by the cathode 5 for the desired beam current (I) is optimised.

In the simplest case the system would have three modes of operation, corresponding to the zero, maximum, or some intermediate beam current. In a zero, or very low beam current situation, the heater voltage would be maintained at a lower limit, and at an upper limit during times of maximum beam current. In an intermediate condition the heater voltage would be regulated to a value proportional to the beam current. The upper and lower limits would be chosen in conjunction with the CRT manufacturer, to ensure that the temperature of the cathode would always be sufficient to supply the number of electrons required.

By way of example, a circuit is shown in Figure 2 which could perform the task of "sensing" the beam current and subsequently modifying the cathode heater voltage accordingly. The solution shown utilises the feedback control loop of a switch mode power supply unit (block 1 in Figure 1 - such units are frequently incorporated in CRT displays. A transformer 6, draws power from the power supply 1, while a feedback loop 7 to the power supply 1, works to maintain high voltage supply rail 8 at a constant voltage V. Z is a network used to provide the desired heater voltage, beam current (Vh-I) characteristic as recommended by the CRT manufacturer. Power is supplied to, for example, the anode voltage generator 3 along line 9. When a higher beam current (I) is required, more power is drawn, which results in DC rectified voltage V1 being greater than V, the difference between the two being dependent on the characteristics of Z and the amount of power drawn off (which in turn is related to the desired beam current).

As the power drawn increases (this is analogous to a larger beam current), DC rectified voltage V1 increases to maintain the high voltage rail 8 at constant voltage V. From the circuit shown, it is apparent that Vh is a fraction of V1. Hence, as V1 increases, so does Vh, thereby resulting in greater energy being imparted by the cathode heater 10 and the generation of a greater number of electrons; the relationship between the relative change in Vh and beam current is defined by the characteristics of network Z.

Figure 3a, shows the Vh-I characteristics for one particular embodiment, where Z is composed of a resistor (R) in parallel with a diode (D). Figures 3b and c illustrate other Vh-I characteristics, Z consisting of a resistor (R) in Fig. 3b and of a diode (D1) in series with a resistor (R1), both components in parallel with a second resistor (R2) in Fig. 3c.

It will be appreciated that different Vh-I characteristics could be realised using more complex networks in location Z, depending on the Vh-I characteristics recommended by the CRT manufacturer. Although at times of maximum stress, that is when peak beam currents are required, the heater voltage and hence the cathode temperature would be greater than a fixed mean value, over a period of time the ability of the system described to vary the heater voltage with beam current would result in a decreased average heater voltage, and thus an increase in CRT lifetime. An added benefit of the system described is that the ability of the heater voltage to vary dynamically as a function of beam current, would greatly decrease the likelihood of cathode stripping.

A simple heater control circuit for a CRT display has been described which operates to extend the life time of the CRT while achieving the high brightness requirements of modern display designs.

## Claims

1. A cathode heater circuit for a CRT display, the circuit comprising control means (4) for varying a voltage (Vh) across the cathode heater (5) in response to variation in the beam current density (I) within the CRT (2);
characterised in that the circuit comprises: a voltage generator (3) for generating a CRT final anode voltage; a power supply (1) for supplying power to the voltage generator (3) to produce the final anode voltage and for supplying power to the cathode heater (5); and an electronic network (Z) for transferring power from the power supply (1) to the voltage generator (3), the network (Z) being configured to dynamically vary the heater voltage in response to variation in power drawn from the power supply (1) by the voltage generator (3).

2. A cathode heater circuit as claimed in claim 1, wherein the network comprises a resistor (R).

3. A cathode heater circuit as claimed in claim 1, wherein the network comprises a diode (D) in parallel with a resistor (R).

4. A cathode heater circuit as claimed in claim 1, wherein the network comprises a series connected diode (D1) and first resistor (R1) connected in parallel with a second resistor (R2).

5. A CRT display comprising a cathode heater circuit as claimed in any preceding claim.

6. A method for increasing the cathode efficiency within a CRT display, the method comprising:
varying a voltage (Vh) across the cathode heater (5) in response to variation in the beam current density (I) within the CRT (2);
generating, using a voltage generator, a CRT final anode voltage; supplying power from a power supply to the voltage generator (3) and to the cathode heater (5);
transferring power from the power supply (1) to the voltage generator (3) using an electronic network,
dynamically varying, using the electronic network, the heater voltage in response to variation in power drawn from the power supply (1) by the voltage generator (3).

## Patentansprüche

1. Ein Kathoden-Heizkreis für eine CRT-Anzeige, wobei der Heizkreis Steuermittel (4) zum Verändern einer Spannung (Vh) an dem Kathoden-Heizelement (5) in Antwort auf eine Veränderung der Strahlstromdichte (I) in der CRT (2) umfaßt;
dadurch gekennzeichnet, daß der Heizkreis folgendes umfaßt: einen Spannungsgenerator (3) zum Erzeugen einer endgültigen CRT-Anodenspannung; eine Stromquelle (1) zum Liefern von Strom an den Spannungsgenerator (3), zur Erzeugung der endgültigen Anodenspannung und zum Liefern von Strom zu dem Kathoden-Heizelement (5); und ein elektronisches Netz (Z) zum Übertragen von Strom von der Stromquelle (1) zum Spannungsgenerator (3), wobei das Netz (Z) so konfiguriert ist, daß die Heizelementspannung in Antwort auf eine Veränderung der vom Spannungsgenerator (3) von der Stromquelle (1) abgezogenen Spannung dynamisch variiert wird.

2. Ein Kathoden-Heizkreis nach Anspruch 1, bei dem das Netz einen Widerstand (R) umfaßt.

3. Ein Kathoden-Heizkreis nach Anspruch 1, bei dem das Netz eine mit einem Widerstand (R) parallel geschaltete Diode (D) umfaßt.

4. Ein Kathoden-Heizkreis nach Anspruch 1, bei dem das Netz eine in Reihe geschaltete Diode (D1) und einen mit einem zweiten Widerstand (R2) parallel geschalteten ersten Widerstand (R1) umfaßt.

5. Eine CRT-Anzeige, die einen Kathoden-Heizkreis nach jedem der vorangehenden Ansprüche umfaßt.

6. Eine Methode zum Erhöhen der Kathodenleistung in einer CRT-Anzeige, wobei die Methode folgendes umfaßt:
Verändern einer Spannung (Vh) an dem Kathoden-Heizelement (5) in Antwort auf eine Veränderung der Strahlstromdichte (I) innerhalb der CRT (2);
unter Verwendung eines Spannungsgenerators, Erzeugen einer endgültigen CRT-Anodenspannung; Liefern von Strom von einer Stromquelle zum Spannungsgenerator (3) und zum Kathoden-Heizelement (5);
Übertragen von Strom von der Stromquelle (1) zu dem Spannungsgenerator (3), unter Verwendung eines elektronischen Netzes,
unter Verwendung des elektronischen Netzes, dynamisches Verändern der Heizelementspannung in Antwort auf die Veränderung des vom Spannungsgenerator (3) von der Stromquelle (1) abgezogenen Stroms.

## Revendications

1. Circuit de chauffage de cathode pour un affichage à tube à rayons cathodiques, ce circuit comprenant des moyens de commande (4) pour faire varier une tension (Vh) aux bornes du chauffage de cathode (5) en réponse à la variation de la densité de courant de faisceau (I) dans l'affichage à tube à rayons cathodiques (2) ;
caractérisé en ce que le circuit comprend : un générateur de tension (3) pour générer une tension finale d'anode du tube à rayons cathodiques ; une alimentation (1) pour fournir de la puissance au générateur de tension (3) pour produire la tension d'anode finale et pour fournir de la puissance au circuit de chauffage de cathode (5) ; et un réseau électronique (Z) pour transférer de la puissance de l'alimentation de puissance (1) au générateur de tension (3), le réseau (Z) étant configuré pour faire varier dynamiquement la tension du chauffage en réponse à la variation de la puissance tirée de l'alimentation de puissance (1) par le générateur de tension (3).

2. Circuit de chauffage de cathode selon la revendication 1, dans lequel le réseau comporte une résistance (R).

3. Circuit de chauffage de cathode selon la revendication 1, dans lequel le réseau comporte une diode (D) en parallèle avec une résistance (R).

4. Circuit de chauffage selon la revendication 1, dans lequel le réseau comporte une diode (D1) connectée en série et une première résistance (R1) connectée en parallèle avec une seconde résistance (R2).

5. Affichage électronique à tube comprenant un circuit de chauffage de cathode selon l'une quelconque des revendications précédentes.

6. Procédé pour augmenter l'efficacité de la cathode dans un affichage à tube électronique, ce procédé comprenant les étapes consistant à :
faire varier une tension (Vh) aux bornes du chauffage de cathode (5) en réponse à la variation de la densité de courant du faisceau (I) dans l'affichage à tube électronique (2) ;
générer en utilisant un générateur de tension, une tension finale d'anode d'affichage à tube électronique ;
fournir de la puissance à partir de l'alimentation de puissance au générateur de tension (3) et au chauffage de cathode (5) ;
transférer de la puissance à partir de l'alimentation de puissance (1) au générateur de tension (3) en utilisant un réseau électronique ;
faire varier dynamiquement, en utilisant le réseau électronique, la tension du chauffage en réponse à la variation de la puissance tirée de l'alimentation de puissance (1) par le générateur de tension (3).
